# EUROPÄISCHE PATENTSCHRIFT

(11) **EP 1 420 177 B1**
(45) Veröffentlichungstag und Bekanntmachung des Hinweises auf die Patenterteilung: **13.07.2005**
(21) Anmeldenummer: 02025788.7
(22) Anmeldetag: 16.11.2002
(51) Int. Cl.: F16C 9/04, F16C 35/02

(54) **Pleuelstange und Verfahren zu deren Herstellung**
Connecting rod and method for manufacturing the same
Bielle et procédé pour sa fabrication

(43) Veröffentlichungstag der Anmeldung: 19.05.2004
(73) Patentinhaber: Gehring GmbH & Co. KG, 73760 Ostfildern (DE)
(72) Erfinder: Abeln, Tobias, Dr., 70327 Stuttgart (DE); Klink, Ulrich, 72639 Neuffen (DE)
(74) Vertreter: Dreiss, Fuhlendorf, Steimle & Becker

(56) Entgegenhaltungen:
- DE-A- 19 956 425
- US-A- 4 474 861
- US-A- 5 072 092
- US-A- 6 103 395
- PATENT ABSTRACTS OF JAPAN vol. 1995, no. 08, 29. September 1995 (1995-09-29) & JP 07 119731 A (TOYOTA MOTOR CORP), 9. Mai 1995 (1995-05-09)
- HOFFMEISTER H.W.; TÖNSHOFF H.K.: 'Jahrbuch Schleifen, Honen, Läppen und Polieren (Seiten 396-408)', 2002, VULKAN-VERLAG ESSEN, ESSEN

## Beschreibung

Die Erfindung betrifft eine Pleuelstange nach dem Oberbegriff des Anspruchs 1 sowie ein Verfahren zur Herstellung einer Pleuelstange nach dem Oberbegriff des Anspruchs 9.

Aus dem "Jahrbuch Schleifen, Honen, Läppen und Polieren" von H.-W. Hoffmeister und H.-K. Tönshoff (Herausgeber), Vulkan-Verlag Essen, 2002, Seiten 396 bis 408 ist es bekannt, an einem Pleuelauge eine Haltenut vorzusehen, in die eine an der Lagerschale ausgebildete Nase ragt. Um einen festeren Haftsitz der Lagerschale zu erreichen, ist weiterhin bekannt, die Oberfläche des Pleuelauges zu honen.

Der Erfindung liegt die Aufgabe zugrunde, eine Pleuelstange der gattungsgemäßen Art zu schaffen, bei der die Lagerschale im Pleuelauge auch bei hohen Belastungen ausreichend fixiert ist, sowie ein Verfahren zur Herstellung einer Pleuelstange mit hoher Lebensdauer zu schaffen.

Diese Aufgabe wird durch eine Pleuelstange mit den Merkmalen des Anspruchs 1 und durch ein Verfahren mit den Merkmalen des Anspruchs 9 gelöst.

Durch die Strukturierung der Oberfläche in einem Pleuelauge mit Vertiefungen, die an ihrem Außenumfang von Erhöhungen begrenzt sind, kann eine gute Fixierung einer Lagerschale in einem Pleuelauge gewährleistet werden. Durch die Erhöhungen an den Strukturkanten der Strukturierung kommt es zu einer Verankerung der Lagerschale im Pleuelauge. Die Strukturierung kann als regelmäßiges Muster ausgebildet sein, das an die auftretenden Belastungen anpaßbar und reproduzierbar herstellbar ist. Durch Veränderung der Tiefe der Vertiefungen und der Höhe der Erhöhungen kann die Strukturierung einfach an auftretende Belastungen angepaßt werden.

Die Vertiefungen mit den seitlichen Erhöhungen sind zweckmäßig als Riefen ausgebildet. Die Riefen können vorteilhaft geradlinig oder sich überkreuzend angeordnet sein. Es kann jedoch auch eine wellenförmige Ausbildung der Riefen zweckmäßig sein. Auch die Ausbildung der Vertiefungen als geschlossene Tasche kann vorteilhaft sein. Die Taschen besitzen zweckmäßig in der Draufsicht eine längliche oder runde Form. Vorteilhaft besitzt die Innenfläche einer Lagerschale und/oder die Oberfläche eines in der Lagerschale gelagerten Bauteils eine Strukturierung, die lediglich aus Vertiefungen gebildet ist. Die Vertiefungen wirken als Mikrodruckkammern und ermöglichen eine hydraulische Schmierung, so daß die Reibung zwischen den Gleitpartnern verringert wird.

Eine einfache Herstellbarkeit der Pleuelstange wird erreicht, wenn die Obenfläche eines Pleuelauges mit einem Laser strukturiert wird. Die Laserstrukturierung ermöglicht gleichzeitig eine gute Anpaßbarkeit der Struktur an die auftretenden Belastungen. Die Erhöhungen werden durch die bei der Bearbeitung entstehenden Schmelzaufwürfe auf den Strukturkanten gebildet, die durch den thermischen Bearbeitungsprozeß entstehen. Die Höhe der Erhöhungen ist über das abgetragene Schmelzevolumen variierbar. Eine Variation des Schmelzevolumens kann über die Bearbeitungsparameter, also beispielsweise über die Vorschubgeschwindigkeit, oder über die Laserparameter, also beispielsweise über die Einstellung der Leistung oder der Pulsdauer erfolgen. Bei einer Laserbearbeitung kann die Ausbildung der Struktur, also beispielsweise der Flächenanteil bei Taschenstrukturen oder der Überschneidungswinkel bei Kreuzstrukturen, einfach verändert werden. Auch die Höhe und Breite der Erhöhungen, die einen Einfluß auf die Haftfestigkeit der Lagerschale im Pleuelauge ausübt, kann bei einer Laserbearbeitung ohne weiteres variiert werden.

Ausführungsbeispiele der Erfindung werden im folgenden anhand der Zeichnung erläutert. Es zeigen:
- Fig. 1: eine schematische, perspektivische Ansicht eines Pleuellagers,
- Fig. 2: einen Schnitt durch ein großes Pleuelauge mit einer darin angeordneten Lagerschale sowie einer Kurbelwelle,
- Fig. 3: das Profil einer Oberfläche eines Pleuelauges entlang der Linie III-III in Fig. 4,

- Fig. 4: eine Draufsicht auf einen Ausschnitt einer Oberfläche eines Pleuelauges,
- Fig. 5: das Profil der Oberfläche eines Pleuelauges entlang der Linie V-V in Fig. 6,
- Fig. 6: einen Ausschnitt einer Draufsicht auf die Oberfläche eines Pleuelauges,
- Fig. 7 bis 12: schematische Darstellungen von Oberflächenstrukturierungen in Draufsicht.

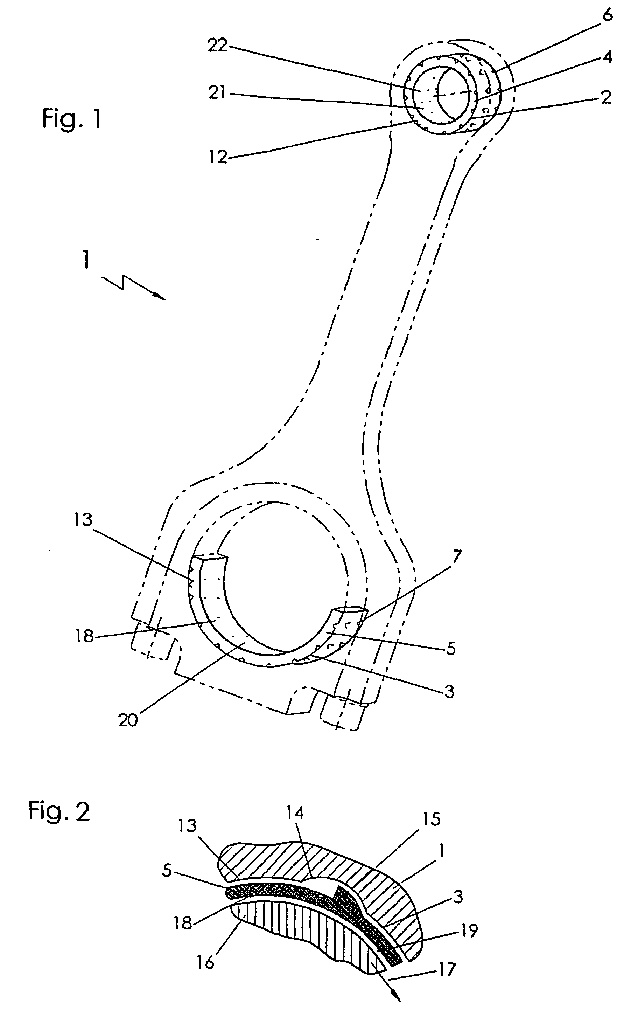

Die in Fig. 1 schematisch dargestellte Pleuelstange 1 besitzt ein kleines Pleuelauge 2 und ein großes Pleuelauge 3. Beim Einsatz in einer Brennkraftmaschine ist im kleinen Pleuelauge 2 üblicherweise ein Kolbenbolzen gelagert, während im großen Pleuelauge 3 die Kurbelwelle gelagert ist. Im kleinen Pleuelauge 2 ist eine Lagerschale 4 angeordnet, während im großen Pleuelauge 3 eine Lagerschale 5 angeordnet ist. Zur festen Fixierung der Lagerschalen 4, 5 in den Pleuelaugen 2, 3 weisen die Bohrungsoberflächen 12 und 13 der Pleuelaugen 2 und 3 Strukturierungen 6 und 7 auf. Die Strukturierungen 6 und 7 führen zu einer Erhöhung der Haftfestigkeit der Lagerschalen 4 und 5. Anstatt oder zusätzlich zu den Strukturierungen 6, 7 der Bohrungsoberflächen 12, 13 können an den mit den Bohrungsoberflächen 12, 13 in Kontakt stehenden Außenflächen der Lagerschalen 4, 5 entsprechende Strukturierungen vorgesehen sein. Auf der Innenseite der Lagerschalen 4 und 5 soll die Reibung zum Kolbenbolzen bzw. zu der Kurbelwelle möglichst gering sein. Zur Verminderung der Reibung weist die Innenfläche 21 der Lagerschale 4 eine Strukturierung 22 und die Innenfläche 18 der Lagerschale 5 eine Strukturierung 20 auf.

Zur Fixierung einer Lagerschale 4, 5 in einem Pleuelauge 2, 3 kann zusätzlich zur Strukturierung 6, 7 eine Nase 15 am Außenumfang einer Lagerschale angeordnet sein, wie in Fig. 2 am Beispiel der Lagerschale 5 dargestellt ist. Die Nase 15 erstreckt sich am Außenumfang der Lagerschale 5 radial nach außen. Das Pleuelauge 3 der Pleuelstange 1 weist im Bereich der Nase 15 eine Haltenut 14 auf, in die die Nase 15 ragt. Zusätzlich weist die Oberfläche 13 des Pleuelauges 3 eine in Fig. 2 nicht dargestellte Strukturierung auf. In der Lagerschale 5 ist die Kurbelwelle 16 gelagert, die sich in Richtung des Pfeils 17 dreht. Während die Reibung zwischen Lagerschale 5 und Pleuelauge 3 möglichst groß sein soll, damit die Lagerschale 5 im Pleuelauge 3 fest gehalten ist, soll die Reibung zwischen der Lagerschale 5 und der Kurbelwelle 16 möglichst klein sein. Hierzu ist vorgesehen, daß die Innenfläche 18 der Lagerschale 5 eine Strukturierung 20 aufweist, wie in Fig. 1 gezeigt. Eine der Strukturierung 20 entsprechende Strukturierung kann jedoch anstatt an der Innenfläche 18 auch an der Außenfläche 19 der Kurbelwelle 16 vorgesehen sein.

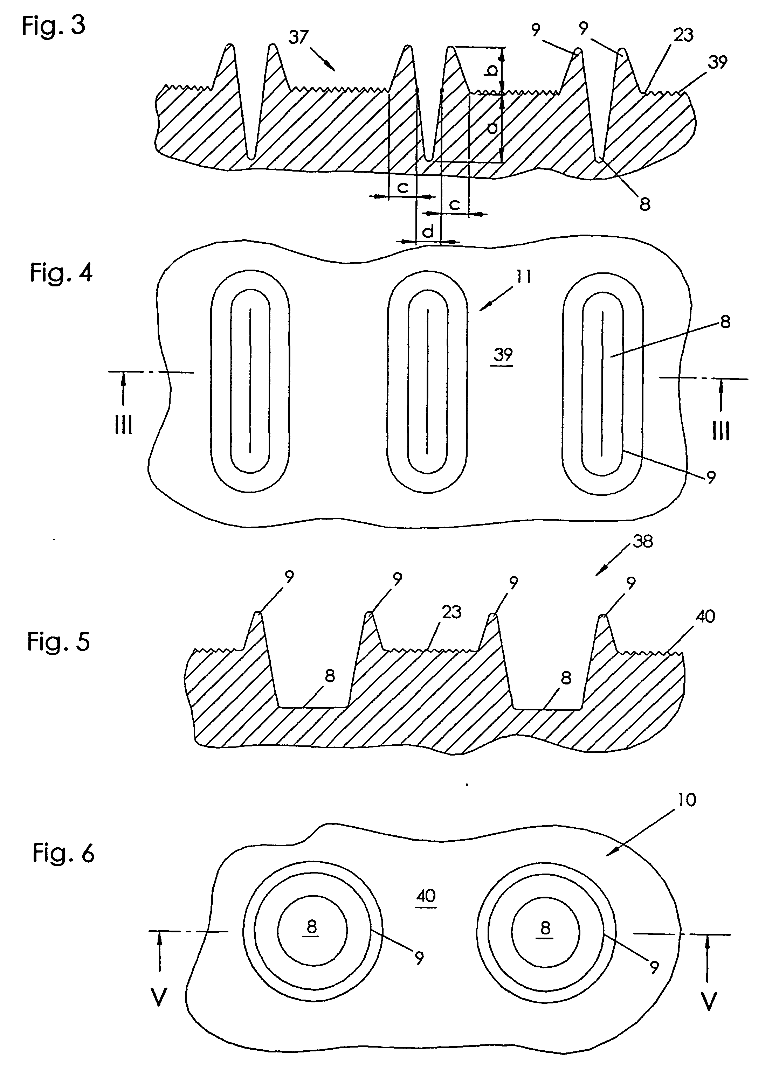

In den Fig. 3 und 4 ist eine Strukturierung 37 einer Oberfläche 39, die die Oberfläche 12, 13 eines Pleuelauges 2, 3 sein kann, vergrößert dargestellt. Die Strukturierung 37 kann im kleinen Pleuelauge 2 und/oder im großen Pleuelauge 3 ausgebildet sein. Die Strukturierung 37 ist in die Oberfläche 39 eingebracht, die eine Grundstruktur 23 aufweist. Die Strukturierung 37 ist zweckmäßig mit einem Laser hergestellt. Die Grundstruktur 23 kann beispielsweise eine durch Honen hergestellte Kreuzstruktur sein. Die Grundstruktur 23 kann jedoch auch aus Umfangsriefen bestehen, die beim Spindeln der Oberfläche 39 entstanden sind. In die Grundstruktur 23 sind in regelmäßigen Abständen längliche Taschen 11 eingebracht, die durch eine Vertiefung 8 gebildet sind, die an ihrem Umfang durch eine umlaufende Erhöhung 9 begrenzt ist. Die Vertiefungen 8 besitzen gegenüber der Oberfläche 39 eine Tiefe a, während die Erhöhungen 9 sich gegenüber der Oberfläche 39 um die Höhe b erheben. Die Erhöhungen 9 besitzen eine Breite c und die Vertiefungen 8 eine Breite d. Die Tiefe a und die Höhe b betragen zweckmäßig etwa bis 50 µm. Auch die Breite c, d wird vorteilhaft ≤ 50 µm gewählt.

Die Fig. 5 und 6 zeigen ein Ausführungsbeispiel einer Strukturierung 38 des großen Pleuelauges 3, die in die Oberfläche 12, 13 des Pleuelauges 2, 3 eingebracht sein kann und die durch runde Taschen 10 gebildet ist. Auch die runden Taschen 10 sind zweckmäßig gleichmäßig in die Oberfläche 40 eingebracht. Die runden Taschen 10 besitzen eine kreisförmige Vertiefung 8, die an ihrem Außenumfang von einer ebenfalls kreisförmigen Erhöhung 9 umgeben ist. Auch die runden Taschen 10 sind in eine Oberfläche 40 eingebracht, die eine Grundstruktur 23 aufweist.

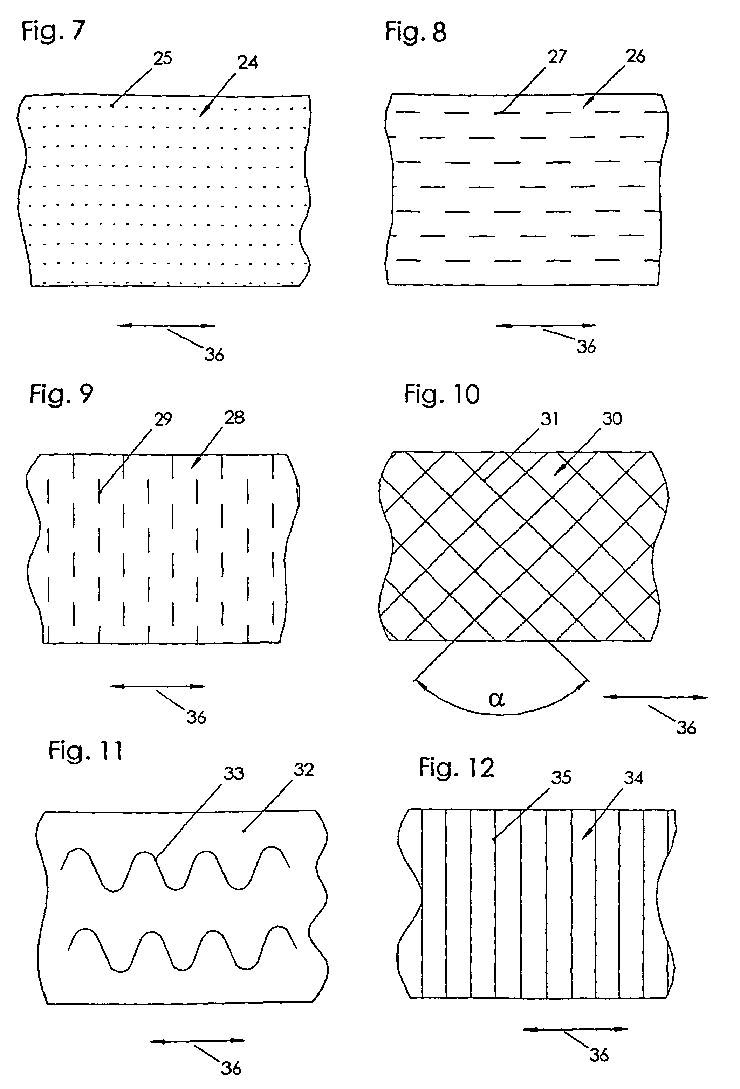

In den Fig. 7 bis 12 sind Beispiele für die Anordnung einer Strukturierung auf einer Oberfläche dargestellt. Der Doppelpfeil 36 bezeichnet dabei jeweils die Umfangsrichtung des Pleuelauges bzw. der Lagerschale. Bei der in Fig. 7 dargestellten Strukturierung 24 sind Taschen 25 in einem regelmäßigen Muster angeordnet. Die Taschen 25 können entsprechend den in den Fig. 5 und 6 dargestellten runden Taschen 10 eine Vertiefung 8 sowie eine Erhöhung 9 aufweisen. Die Strukturierung 24 ist dann zweckmäßig auf der Bohrungsoberfläche 12 des kleinen Pleuelauges 2 oder der Bohrungsoberfläche 13 des großen Pleuelauges 3 eingebracht. Es kann jedoch auch zweckmäßig sein, Taschen 25 vorzusehen, die keine Erhöhung 9 aufweisen. Derartige Taschen führen zu einer Verringerung der Reibung zwischen den Gleitpartnern, da sie als Schmierstoffreservoir dienen und so eine hydrodynamische Vollschmierung ermöglichen. Gleichzeitig wirken die Taschen als Mikrodruckkammern. Derartig ausgebildete Taschen 25 sind zweckmäßig auf der Innenfläche 21 der Lagerschale 4 und/oder dem Außenumfang eines Kolbenbolzens sowie auf der Innenfläche 18 der Lagerschale 5 und/oder der Außenfläche 19 der Kurbelwelle 16 angebracht.

In Fig. 8 sind längliche Taschen 27 dargestellt, die etwa in Umfangsrichtung verlaufen. Die länglichen Taschen 27 sind regelmäßig angeordnet und bilden eine Strukturierung 26. In Fig. 9 ist eine Strukturierung 28 durch längliche Taschen 29 gebildet, die etwa quer zur Umfangsrichtung verlaufen. Es kann jedoch auch zweckmäßig sein, längliche Taschen vorzusehen, die mit der Umfangsrichtung einen Winkel zwischen 0° und 90° einschließen. Die Strukturierungen 26 und 28 können auf der Innenfläche 18 der Lagerschale 5 bzw. der Außenfläche 19 der Kurbelwelle 16 und/oder der Innenfläche 21 der Lagerschale 4 bzw. der Außenfläche eines Kolbenbolzens angeordnet sein. Die Taschen 27 und 29 sind dann zweckmäßig lediglich als Vertiefungen ausgebildet. Es kann jedoch auch zweckmäßig sein, daß die Taschen 27 und 29 an ihrem Außenumfang jeweils durch eine Erhöhung 9 begrenzt sind. Derartig ausgebildete Taschen 27 und 29 führen zu einer Erhöhung der Reibung und sind zweckmäßig auf der Oberfläche 12 des Pleuelauges 2 bzw. der Oberfläche 13 des Pleuelauges 3 angeordnet.

Die in Fig. 10 dargestellte Strukturierung 30 ist durch sich überkreuzende Riefen 31 gebildet, die jeweils von Erhöhungen 9 begrenzt sind. Die Riefen 31 besitzen einen Überschneidungswinkel α. Die Strukturierung 30 ist zweckmäßig auf einer Oberfläche 12, 13 eines Pleuelauges 2, 3 ausgebildet. Durch Variation des Überschneidungswinkels α kann bei der Strukturierung 30 die Haftfestigkeit beeinflußt werden. In Fig. 11 ist eine Strukturierung 32 dargestellt, die wellenförmige Riefen 33 aufweist. Auch die Riefen 33 besitzen an ihrem Außenumfang Erhöhungen 9. Die Riefen 33 sind zweckmäßig an den Oberflächen 12 und 13 der Pleuelaugen 2 und 3 angeordnet. Fig. 12 zeigt eine Strukturierung 34 mit parallel zueinander verlaufenden Riefen 35. Die Riefen 35 sind in Fig. 12 etwa senkrecht zur Umfangsrichtung angeordnet. Es kann jedoch auch zweckmäßig sein, daß die Riefen 35 mit der Umfangsrichtung einen Winkel von weniger als 90° einschließen. Auch die Riefen 35 besitzen zweckmäßig an ihrem Außenumfang Erhöhungen 9 und führen so zu einer Vergrößerung der Reibung zwischen Pleuelauge 2, 3 und Lagerschale 4, 5.

Eine Pleuelstange 1 wird zweckmäßig hergestellt, indem die Oberfläche 12, 13 eines bzw. beider Pleuelaugen 2, 3 mit einem Laser strukturiert wird. Vor der Laserstrukturierung wird die Oberfläche 12, 13 zweckmäßig feinbearbeitet. Hierdurch wird eine Grundstruktur 23 erzeugt, in die dann die Strukturierung eingebracht wird. Die Haftfestigkeit einer Strukturierung 6, 7 auf der Oberfläche 12, 13 eines Pleuelauges 2, 3 kann bei Taschenstrukturen 10, 11, 24, 26, 28 durch den Flächenanteil stark beeinflußt werden. Bei Kreuzstrukturierungen 30 ist die Haftfestigkeit durch Variation des Überschneidungswinkels α veränderbar. Bei allen Strukturierungen haben die Höhe b der Erhöhungen 9 sowie die Breite der Erhöhungen 9 einen Einfluß auf die Haftfestigkeit.

## Patentansprüche

1. Pleuelstange mit einem kleinen Pleuelauge (2) und einem großen Pleuelauge (3), wobei in mindestens einem Pleuelauge (2, 3) eine Lagerschale (4, 5) angeordnet ist, und die Lagerschale (4, 5) in dem Pleuelauge (2, 3) verdrehsicher gehalten ist, wobei die Bohrungsoberfläche (12, 13) in einem Pleuelauge (2, 3) und/oder die Außenfläche einer Lagerschale (4, 5) eine Strukturierung (6, 7, 24, 26, 28, 30, 32, 34, 37, 38) aufweist,
**dadurch gekennzeichnet, daß** die Strukturierung (6, 7, 24, 26, 28, 30, 32, 34, 37, 38) durch Erhöhungen (9) gebildet ist, wobei die Erhöhungen (9) Vertiefungen (8) an deren Außenumfang begrenzen.

2. Pleuelstange nach Anspruch 1,
**dadurch gekennzeichnet, daß** die Vertiefungen als Riefen (31, 33, 35) ausgebildet sind.

3. Pleuelstange nach Anspruch 2,
**dadurch gekennzeichnet, daß** die Riefen (35) geradlinig angeordnet sind.

4. Pleuelstange nach Anspruch 2,
**dadurch gekennzeichnet, daß** die Riefen (31) überkreuzend angeordnet sind.

5. Pleuelstange nach Anspruch 2,
**dadurch gekennzeichnet, daß** die Riefen (33) wellenförmig ausgebildet sind.

6. Pleuelstange nach Anspruch 1,
**dadurch gekennzeichnet, daß** die Vertiefungen (8) als geschlossene Taschen (10, 11, 25, 27, 29) ausgebildet sind.

7. Pleuelstange nach Anspruch 6,
**dadurch gekennzeichnet, daß** die Taschen (10, 11, 25, 27, 29) in Draufsicht eine längliche oder runde Form besitzen.

8. Verfahren zur Herstellung einer Pleuelstange (1), die mindestens ein Pleuelauge (2, 3) mit einer strukturierten Bohrungsoberfläche (12, 13) aufweist, wobei in dem Pleuelauge (2, 3) nach der Bohrungsoberflächenstrukturierung eine Lagerschale (4, 5) angeordnet wird,
**dadurch gekennzeichnet, daß** die Bohrungsoberfläche (12, 13) mit einem Laser strukturiert wird, daß Erhöhungen (9) gebildet werden, die Vertiefungen (8) an deren Außenumfang begrenzen.

## Claims

1. Connecting rod with a small end bearing eye (2) and a big end bearing eye (3), whereby a bearing shell (4, 5) is arranged in at least one connecting rod eye (2, 3), and the bearing shell (4, 5) is held in the connecting rod eye (2, 3) in rotation-resistant manner, whereby the bore surface (12, 13) has structuring (6, 7, 24, 26, 28, 30, 32, 34, 37, 38) in a connecting rod eye (2, 3) and/or the outer surface of a bearing shell (4, 5), **characterised in that** the structuring (6, 7, 24, 26, 28, 30, 32, 34, 37, 38) is formed by elevations (9), whereby the elevations (9) border depressions on the outer periphery of said depressions.

2. Connecting rod according to claim 1, **characterised in that** the depressions are formed as grooves (31, 33, 35).

3. Connecting rod according to claim 2, **characterised in that** the grooves (35) are arranged linearly.

4. Connecting rod according to claim 2, **characterised in that** the grooves (31) are arranged mutually intersecting.

5. Connecting rod according to claim 2, **characterised in that** the grooves (33) are formed wave-shaped.

6. Connecting rod according to claim 1, **characterised in that** the depressions (8) are formed as closed pockets (10, 11, 25, 27, 29).

7. Connecting rod according to claim 6, **characterised in that** the pockets (10, 11, 25, 27, 29) have an elongated or round form in plan view.

8. Method for manufacturing a connecting rod (1) which has at least one connecting rod eye (2, 3) with a structured bore surface (12, 13), whereby, following the surface structuring, a bearing shell (4, 5) is arranged in the connecting rod eye (2, 3), **characterised in that** the bore surface (12, 13) is structured with a laser, such that elevations (9) are formed which border depressions (8) on the outer periphery of said depressions.

## Revendications

1. Bielle comportant une petite tête de bielle (2) et une grande tête de bielle (3), dans l'une au moins des têtes de bielle (2, 3) étant agencée une coque de palier (4, 5), et la coque de palier (4, 5) étant retenue solidairement en rotation dans la tête de bielle (2, 3), la surface de perçage (12, 13) dans une tête de bielle (2, 3) et/ou la surface extérieure d'une coque de palier (4, 5) présentant une structuration (6, 7, 24, 26, 28, 30, 32, 34, 37, 38), **caractérisée en ce que** la structuration (6, 7, 24, 26, 28, 30, 32, 34, 37, 38) est formée par des bossages (9), les bossages (9) délimitant des renfoncements (8) à leur périphérie extérieure.

2. Bielle selon la revendication 1, **caractérisée en ce que** les renfoncements sont réalisés sous forme de cannelures (31, 33, 35).

3. Bielle selon la revendication 2, **caractérisée en ce que** les cannelures (35) sont agencées en ligne droite.

4. Bielle selon la revendication 2, **caractérisée en ce que** les cannelures (31) sont agencées en se croisant.

5. Bielle selon la revendication 2, **caractérisée en ce que** les cannelures (33) sont réalisées en forme ondulée.

6. Bielle selon la revendication 1, **caractérisée en ce que** les renfoncements (8) sont réalisés sous forme de poches fermées (10, 11, 25, 27, 29).

7. Bielle selon la revendication 6, **caractérisée en ce que** les poches (10, 11, 25, 27, 29) possèdent en vue de dessus une forme allongée ou ronde.

8. Procédé pour fabriquer une bielle (1) qui comprend au moins une tête de bielle (2, 3) avec une surface de perçage structurée (12, 13), dans lequel on agence dans la tête de bielle (2, 3), après structuration de la surface de perçage, une coque de palier (4, 5), **caractérisé en ce que** la surface de perçage (12, 13) est structurée par laser, et **en ce que** l'on forme des bossages (9) qui délimitent des renfoncements (8) à leur périphérie extérieure.
